# EUROPEAN PATENT SPECIFICATION

(11) **EP 3 653 406 B1**
(45) Date of publication and mention of the grant of the patent: **07.04.2021**
(21) Application number: 19203203.5
(22) Date of filing: 15.10.2019
(51) Int. Cl.: B60C 19/00, B60C 5/14, B60C 15/06, H01Q 1/22

(54) **TIRE**
REIFEN
PNEUMATIQUE

(30) Priority: 14.11.2018 JP 2018213621
(43) Date of publication of application: 20.05.2020
(73) Proprietor: Toyo Tire Corporation, Itami-shi, Hyogo 664-0847 (JP)
(72) Inventor: HOSOMI, Kazumasa, Itami-shi, Hyogo 664-0847 (JP)
(74) Representative: Müller-Boré & Partner Patentanwälte PartG mbB

(56) References cited:
- EP-A1- 0 505 905
- EP-A1- 0 639 472
- EP-A2- 1 318 032
- EP-A2- 2 000 776
- US-A1- 2006 164 250
- US-A1- 2018 264 898

## Description

### BACKGROUND OF THE INVENTION

### Field of the Invention

The present invention relates to a tire in which an electronic component is embedded.

### Related Art

Conventionally, tires in which an electric component such as an RFID tag is embedded within the rubber structure have been known. With such tires, by an RFID tag embedded in the tire and a reader as an external device carrying out communication, it is possible to perform production control of tires, usage history management, etc. For example, Patent Document 1 discloses a tire arranging a chip assembled with the electronic component having an identifying element arranged at a portion adjacent to an inner liner. In addition, it shows being possible to also arrange the electronic component between a carcass and side wall, or between a carcass and tread portion.

Reference US 2006/164250 A1 is directed to a method of securing a wireless IC tag which does not break if it is attached to tires used in harsh operation environment.

Reference EP 1 318 032 A2 relates to a method of manufacturing a vehicle tire having a transponder unit embedded in a rubber pad arranged at a surface of the tire.

Reference EP 0 505 905 A1 discloses a pneumatic tire having an integrated circuit transponder, which upon interrogation by an external RF signal, transmits tire identification. The transponder has a coil antenna of small enclosed area as compared to the area enclosed by an annular tensile member comprising a bead of the tire. The annular tensile member, during transponder interrogation, acts as the primary winding of a transformer.

Reference EP 2 000 776 A2 is directed to a tire revolution detecting system including an electric power generator and an RF tag, both provided in a sidewall portion and a bead portion of the tire.

Reference US 2018/264898 A1 discloses a pneumatic tire having a passive transponder incorporated therein that allows communication with a radio-frequency reader located outside the tire. The transponder includes at least one radiating antenna and is embedded in an electrically insulating elastomeric blend to form a patch. The patch extends axially between an axially inner end of a carcass ply of the tire an inner surface of the tire. The patch also extends radially at a distance between a bead toe of the tire and a radially outer end of a bead core of the tire.

Reference EP 0 639 472 A1 discloses a pneumatic tire having a transponder, wherein the transponder is buried in a projected portion at an inner surface of a bead portion of the tire.
Patent Document 1: Japanese Unexamined Patent Application, Publication No. 2005-335384

### SUMMARY OF THE INVENTION

According to the technology illustrated in Patent Document 1, it is possible to perform inventory control and monitoring of tires, using an identification element. However, in the technology illustrated in Patent Document 1, in a situation such that the tire is damaged and greatly broken, and the identification element goes missing along with the rubber structure of the tire, there is a possibility of no longer being able to carry out traceability up to the end of market life of the tire.

The present invention has been made taking account of the above-mentioned problem, and is for providing a tire capable of carrying out traceability up to the end of market life, also in a case of the tire being damaged.

A tire (for example, the tire 1) according to a first aspect of the present invention includes an RFID tag (for example, the traceability RFID tag 50) for traceability capable of communicating from at least an inner cavity side of the tire which is disposed in a peripheral region of a bead core (for example, the bead core 21).

According to a first aspect of the present invention, the tire further include a carcass ply (for example, the carcass ply 23) which extends from one bead core (for example, the bead core 21) to another bead core and is folded back around the bead core; and a chafer (for example, the chafer 31) which is arranged so as to cover the carcass ply around the bead core, in which the RFID tag for traceability is disposed between the carcass ply and the chafer.

According to a second aspect of the present invention, in the tire as described in the first aspect, the RFID tag for traceability is disposed at a position from which communication is not possible from outside of the tire when the tire has been mounted to a rim (for example, the rim 60).

According to a third aspect of the present invention, the tire as described in the first or second aspect may further include an RFID tag (for example, the normal-use RFID tag 40) for normal-use which is communicable from outside of the tire when the tire has been mounted to a rim.

According to a fourth aspect of the present invention, in the tire as described in any one of the preceding aspects, the RFID tag for traceability may be disposed at an inner side in a tire-width direction of the bead core.

According to the present invention, it becomes possible to provide a tire capable of carrying out traceability up to the end of market life, also in a case of the tire being damaged.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of the tire according to the first embodiment of the present invention;
FIG. 3 is a view showing a half section in the tire-width direction of a tire according to a modified example of the first embodiment, the modified example not being covered by the present invention;
FIG. 4 is a partially enlarged cross-sectional view of a tire according to a modified example of the first embodiment, the modified example not being covered by the present invention;
FIG. 5A is a view showing an RFID tag which is protected by a protective member in a tire according to a second embodiment of the present invention;
FIG. 5B is a view showing a cross section along the line b-b in FIG. 5A;
FIG. 5C is a view showing a cross section along the line c-c in FIG. 5A;
FIG. 6 is a view showing a cross section prior to interposing the RFID tag by rubber sheets, in a case of not filling rubber into a spring antenna;
FIG. 7 is a view showing a cross section after interposing the RFID tag by rubber sheets, in a case of not filling rubber into the spring antenna;
FIG. 8 is a view showing a cross section after interposing the RFID tag by rubber sheets, in a case of not filling rubber into the spring antenna;
FIG. 9 is a view showing an RFID tag prior to filling rubber into the spring antenna, in a tire according to a third embodiment of the present invention;
FIG. 10 is a view showing the RFID tag after filling rubber into the spring antenna, in the tire according to the third embodiment of the present invention;
FIG. 11 is a view showing the RFID tag prior to interposing by rubber sheets, in the tire according to the third embodiment of the present invention; and
FIG. 12 is a view showing the RFID tag interposed by rubber sheets, in the tire according to the third embodiment of the present invention.

### DETAILED DESCRIPTION OF THE INVENTION

### <First Embodiment>

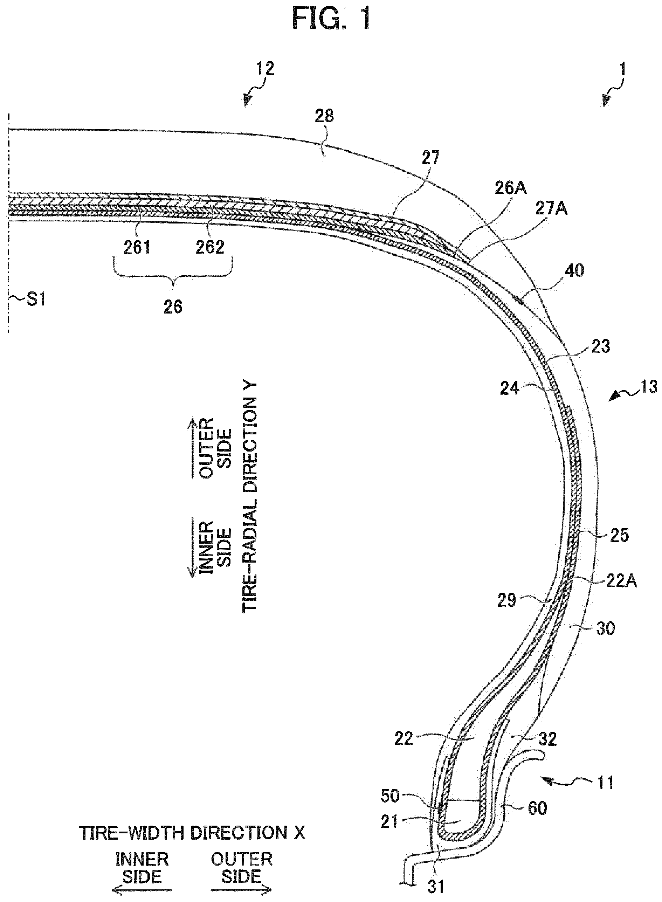

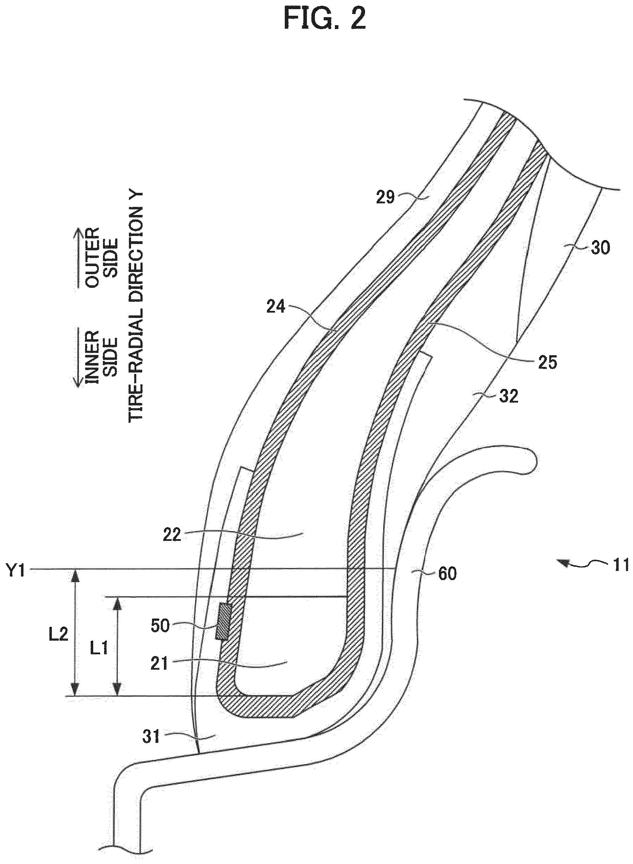

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side of tire-radial direction is a direction distancing from the tire rotation axis, and is the upper side of the paper plane in FIG. 1. Inner-side of tire-radial direction is a direction approaching the tire rotation axis, and is the lower side of the paper plane in FIG. 1. The same also applies to FIGS. 2 to 4.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire 1 filled with air to the rim 60 of a wheel. The bead filler 22 is a member provided in order to raise the rigidity of the bead peripheral part and to ensure high maneuverability and stability, and is configured from rubber of a higher modulus than the surrounding rubber members, for example.

A carcass ply 23 constituting a ply serving as the skeleton of the tire 1 is embedded inside of the tire 1. The carcass ply 23 extends from one bead core 21 to the other bead core 21. In other words, it is embedded in the tire 1 between the pair of bead cores 21, in a form passing through the pair of side walls 13 and the tread 12. As shown in FIG. 1, the carcass ply 23 includes a ply body 24 which extends from one bead core 21 to the other bead core 21, and extends between the tread 12 and bead 11, and a ply folding part 25 which is folded around the bead core 21. In the present embodiment, the ply folding part 25 is overlapped with the ply body 24. The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by rubber.

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling. In the present embodiment, the tire-width direction outside end 27A of the cap ply 27 extends more to the outer side in the tire-width direction than the tire-width direction outside end 26A of the steel belt 26.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire 1 exhibiting a cushioning action, and usually flexible rubber having fatigue resistance is adopted therein.

Herein, as shown in FIG. 1, the side-wall rubber 30 extends towards the tread 12. On the other hand, the tread rubber 28 extends towards the side wall 13. As a result thereof, at the tire outer surface side in a partial region of the carcass ply 23, the tread rubber 28 and side-wall rubber 30 enter a laminated state. In more detail, in a region in which both the side-wall rubber 30 and tread rubber 28 exist, i.e. transition region of side wall 13 and tread 12, the side-wall rubber 30 and tread rubber 28 enter a laminated state in order at the tire outer surface side of the carcass ply 23.

The chafer 31 is provided so as to cover the carcass ply 23 around the bead core 21. In more detail, the chafer 31 is provided so as to cover the inner side in the tire-width direction, the inner side in the tire-radial direction and the outer side in the tire-width direction, of the carcass ply 23 around the bead core 21. An end side of the chafer 31 is arranged so as to be sandwiched between the ply body 24 of the carcass ply 23 and the inner liner 29. The other end side of the chafer 31 is arranged so as to be sandwiched between the ply folding part 25 of the carcass ply 23 and the rim strip rubber 32. The chafer 31 is configured from rubber kneading fibers thereinto or rubber of high modulus, for example, and has relatively high strength among the constituent members constituting the tire 1. For example, the strength is higher than the inner liner 29 and side-wall rubber 30. The rim strip rubber 32 arranged at the outer side in the tire-width direction of the ply folding part 25 and chafer 31 is a rubber member in which the outer side in the tire-width direction thereof makes contact with the rim 60 of a wheel, upon the tire 1 being mounted to a wheel. An outer side in the tire-radial direction of this rim strip rubber 32 connects to the side-wall rubber 30.

In the tire 1 of the present embodiment, embedded are a normal-use RFID tag 40 which is capable of communication from outside when the tire 1 is mounted to the rim 60, and a traceability RFID tag 50 for enabling to carry out traceability until end of market life, even in a case such that the tire 1 is damaged and greatly broken.

The RFID tag 40, 50 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. In a storage part inside the RFID chip, identification information such as a manufacturing number and part number is stored. It should be noted that the normal-use RFID tag 40 and traceability RFID tag 50 may be the same type of RFID tags, or may be RFID tags of different communication functions, etc.

As shown in FIG. 1, the normal-use RFID tag 40 is embedded between the side-wall rubber 30 and tread rubber 28. This position is suitable as the embedding position of the normal-use RFID tag 40, when considering the communication quality. In other words, by embedding the normal-use RFID tag 40 in a transition region of the side wall 13 and tread 12, it is possible to arrange the normal-use RFID tag 40 at a position sufficiently distanced from the bead core 21 made of metal which has a possibility of adversely influencing communication. Herein, the bead core 21 is formed in a ring shape by winding the metal bead wires in layers, and thus is a metal member having a particularly high possibility of adversely influencing the communication. Consequently, long distance communication becomes difficult when arranging the RFID tag in a peripheral region of the bead core 21.

In addition, as shown in FIG. 1, upon extending the tire-width direction outside end 27A of the cap ply 27 more to the outer side in the tire-width direction than the tire-width direction outside end 26A of the steel belt 26, a configuration may be adopted arranging the normal-use RFID tag 40 more to the tire outer surface side than the tire-width direction outside end 27A of the cap ply 27, and reliably separating the normal-use RFID tag 40 from the steel belt 26 made of metal.

Then, if considering communication quality, the normal-use RFID tag 40 is preferably arranged at a portion as close as possible to the outer surface of the tire 1. Assuming to arrange the normal-use RFID tag 40 at an inner cavity side of the carcass ply 23, the communication quality will drop due to being distanced from the outer surface of the tire 1. Consequently, the normal-use RFID tag 40 is preferably arranged at the tire outer surface side of the carcass ply 23. In addition, since the rubber layer on the tire outer surface side of the carcass ply 23 is thicker in rubber layer than the inner liner 29, during vulcanization, it tends to maintain a state in which the normal-use RFID tag 40 is embedded within the rubber layer. When considering these points, between the side-wall rubber 30 and tread rubber 28 is suitable as the embedding position of the normal-use RFID tag 40.

In the tire 1 of the present embodiment, in addition to the normal-use RFID tag 40 capable of communication from outside when the tire 1 is mounted to the rim 60, the traceability RFID tag 50 f is embedded for enabling to carry out traceability up to end of market life, even in a case of the tire being damaged and greatly broken, for example.

FIG. 2 is an enlarged cross-sectional view showing the vicinity of an embedding part of the RFID tag 50 for traceability in the tire 1 of FIG. 1. As shown in FIGS. 1 and 2, the traceability RFID tag 50 is arranged in a peripheral region of the bead core 21. In the present embodiment, the traceability RFID tag 50 is arranged at the inner side in the tire-width direction of the bead core 21, between the carcass ply 23 and chafer 31. In more detail, the traceability RFID tag 50 is arranged within a range of a cross-section height L1 of the bead core 21 (tire-radial direction cross-sectional height L1 of the bead core 21 in cross-sectional view in tire-width direction shown in FIG. 2) in the tire-radial direction. So long as arranging the traceability RFID tag 50 in the peripheral region of the bead core made of metal in this way, even in a case of the tire being damaged and greatly broken, e.g., case of the tread 12 or side wall 13 being broken, the traceability RFID tag 50 will remain together with the bead core 21; therefore, it becomes possible to carry out traceability up to end of market life.

Then, in the case of positioning this traceability RFID tag 50 as a tag for communicating at least when the wheel is unmounted such as prior to delivery, and during tire damage at end of market life, this traceability RFID tag 50 may be made communicable at least from the inner cavity side of the tire 1. This is because, when the tire is unmounted, and during tire damage at end of market life, it is possible to access a reader from an inner cavity side of the tire 1. Such a traceability RFID tag 50 can be used as an RFID tag for traceability during tire damage.

In other words, the traceability RFID tag 50 may be arranged at a position at which communication is not possible from outside of the tire 1, in a state mounting the tire 1 to the rim 60. By appropriately setting the communication function of a communication unit including an antenna of the traceability RFID tag 50, and arranging the traceability RFID tag 50 in the peripheral region of the bead core 21 made of metal, it is possible to establish such a state. Even if the usage frequency band of the traceability RFID tag 50 is the same frequency band as the normal-use RFID tag 40, for example, a signal of the traceability RFID tag 50 will not be mixed into the signal of the normal-use RFID tag 40, during normal use, i.e. case of the tire 1 being mounted to the rim 60.

In addition, as the communication part including an antenna of the traceability RFID tag 50, it is no longer necessary to adopt a communication part of high cost capable of communication of longer distance than necessary. In other words, as the traceability RFID tag 50, it is also possible to use a small-scale RFID tag of lower communication performance than the normal-use RFID tag 40. In this case, as the function of the RFID tag alone (function prior to assembling to the tire 1), the communicable distance possessed by the communication part of the traceability RFID tag 50 may be shorter than the communicable distance possessed by the communication part of the normal-use RFID tag 40. For example, as the antenna of the traceability RFID tag 50, an antenna differing from the antenna of the normal-use RFID tag 40 may be adopted. More specifically, as the antenna of the normal-use RFID tag 40, considering the communicability and flexibility, a coil-like spring antenna may be adopted, and as the antenna of the traceability RFID tag 50, considering scale reduction, a print antenna formed by printing an antenna pattern on a substrate may be adopted. In addition, the usage frequency bands of the traceability RFID tag 50 and the normal-use RFID tag 40 may be made to differ by adopting different communication units.

It should be noted that the antenna of the traceability RFID tag 50 is preferably arranged so as not to contact the bead core 21. As shown in the present embodiment, by arranging the traceability RFID tag 50 between the carcass ply 23 and chafer 31, it is possible to reliably prevent contact between the antenna and bead core 21. In addition, the antenna of the traceability RFID tag 50 is preferably provided at a position which does not electromagnetically field couple with the bead core 21 in the usage frequency band. However, although the communication quality declines, it is also possible to adopt a configuration in which the antenna and bead core 21 make contact, or a configuration making electromagnetic field coupling.

It should be noted that the traceability RFID tag 50 is preferably arranged at an inner side in the tire-width direction of the bead core 21, which becomes a position on the opposite side to the rim 60 made of metal, when the tire 1 is mounted to the rim 60. So long as being this position, it is more suitable as the arranging position of the RFID tag, due to not being strongly pressed against the rim 60.

However, the traceability RFID tag 50 may be arranged at an inner side in the tire-radial direction of the bead core 21, or at an outer side in the tire-width direction of the bead core 21. For example, it may be arranged between the carcass ply 23 and chafer 31 at the inner side in the tire-radial direction of the bead core 21, or between the carcass ply 23 and chafer 31 at the outer side in the tire-width direction of the bead core 21.

It should be noted that, according to the present embodiment, the traceability RFID tag 50 is arranged in a peripheral region of the bead core 21 made of metal, and arranged between high-strength members, specifically, arranged between the chafer 31 having higher strength and modulus than the inner liner 29 and/or side-wall rubber 30, and the carcass ply 23 having a fiber cord; therefore, it is reliably protected until the end of market life of the tire 1.

It should be noted that the arranging position of the normal-use RFID tag 40 is not limited to between the side-wall rubber 30 and tread rubber 28. When considering communication quality, it is preferable to be arranged in a region between the tire-radial direction outside end 22A of the bead filler 22 and the tire-width direction outside end 26A of the steel belt 26; however, it is sufficient so long as arranged at a position at which communication is easier than for the traceability RFID tag 50. For example, it may be arranged at a desired position on the tire outer surface side of the carcass ply 23, or in a peripheral region of the tire-radial direction outside end 22A of the bead filler 22.

It should be noted that, only the normal-use RFID tag 40 which performs communication during normal use, among the RFID tags 40 and 50, may be configured as a tag having a sensor function, or a tag able to save sensor information from a sensor arranged in the tire 1. In this case, the traceability RFID tag 50 is configured to at least store identification information, and be able to send the identification information even at end of market life. However, the traceability RFID tag 50 may be configured as a tag having a sensor function, or a tag able to save sensor information from a sensor arranged in the tire 1. In addition, among the information saved in the storage unit of the normal-use RFID tag 40, it may be configured in as a form selectively storing only part of the information in the storage unit of the traceability RFID tag 50. In this case, in addition to the identification information, sensor information which is particularly important upon analyzing the tire 1, etc. is saved in the storage unit of the traceability RFID tag 50.

Herein, the RFID tags 40, 50 are mounted prior to the vulcanization process in the manufacturing process of the tire 1. In the present embodiment, the normal-use RFID tag 40 is mounted to the tread rubber 28 or side-wall rubber 30. In addition, the traceability RFID tag 50 is mounted to the carcass ply 23 or chafer 31. At this time, due to the rubber components such as the tread rubber 28, side-wall rubber 30, coating rubber of the carcass ply 23 and chafer 31 being in a state of raw rubber, the RFID tags 40, 50 may be pasted to a rubber component using the adhesiveness thereof. Alternatively, in a case of the adhesiveness being low or the like, it may be pasted using an adhesive or the like. After pasting the RFID tags 40, 50, the RFID tags 40, 50 are interposed by the respective rubber members. Subsequently, the green tire in which the respective rubber members including the RFID tags 40, 50 are assembled is vulcanized in the vulcanization step to manufacture the tire 1.

In this way, with the present embodiment, it is possible to paste the RFID tags 40, 50 to rubber members in the raw rubber state during the tire manufacturing, and it is possible to arrange the RFID tags 40, 50 between different members; therefore, the assembly work of the RFID tags 40, 50 in the manufacturing process of the tire 1 is easy.

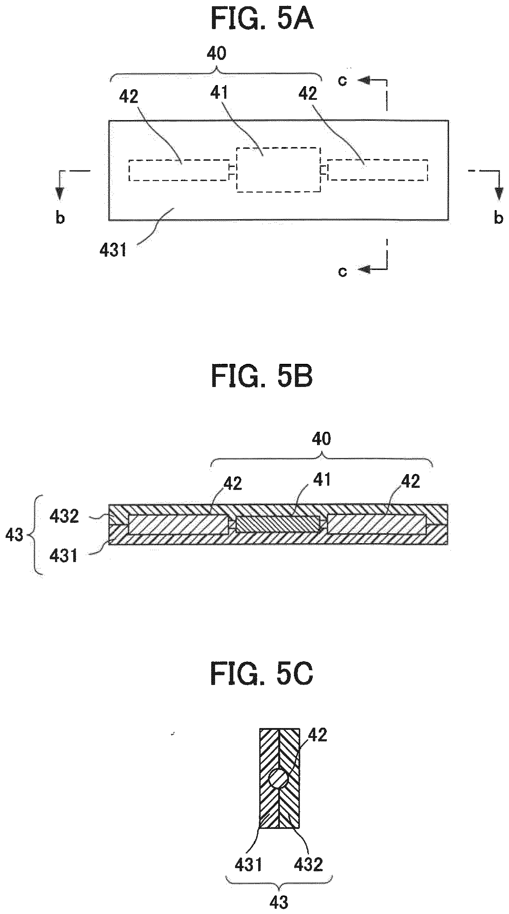

It should be noted that the RFID tag 40, 50 embedded in the tire 1 tend to have a longitudinal direction if including an antenna, as shown in FIG. 5 described later as the RFID tag 40. Such an RFID tag 40, 50 is preferably embedded in the tire 1 so that the longitudinal direction thereof is becomes the direction of the tangential line relative to the circumferential direction of the tire 1, i.e. direction orthogonal to the paper plane in the cross-sectional view of FIGS. 1 and 2. By embedding in this way, stress hardly acts on the RFID tag 40, 50 even when the tire 1 deforms.

It should be noted that the RFID tags 40, 50 may be sandwiched between different members in a state covered by a protective member such as rubber sheets, or may be sandwiched between different members, without being covered by a protective member.

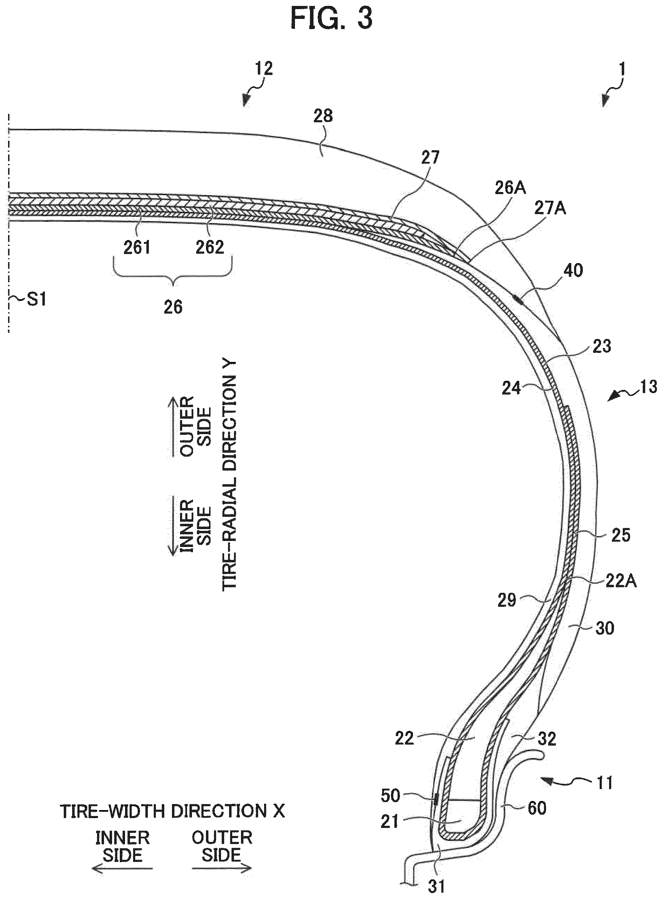

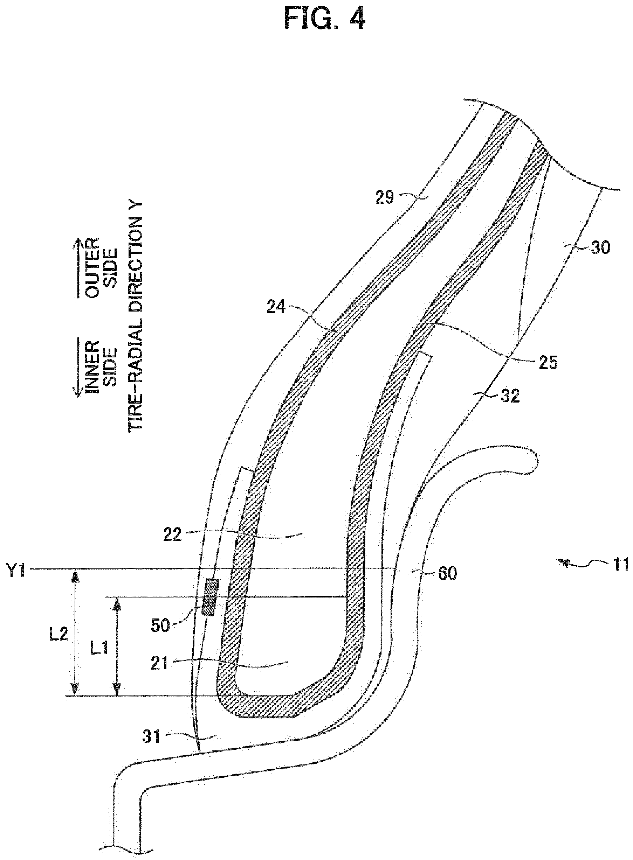

FIG. 3 is a view showing a half section in the tire-width direction of the tire 1 of a modified example of the present embodiment, the modified example not being covered by the invention. FIG. 4 is an enlarged cross-sectional view showing the vicinity of an embedded part of the traceability RFID tag 50 in the tire 1 of FIG. 3. Also in the present modified example, the traceability RFID tag 50 is arranged in a peripheral region of the bead core 21; however, the detailed arranging position thereof differs. In the present modified example, the traceability RFID tag 50 is arranged between the chafer 31 and inner liner 29.

Even in this case, the traceability RFID tag 50 is arranged in the peripheral region of the bead core 21; therefore, similar effects as the embodiments of FIGS. 1 and 2 can be obtained. Furthermore, according to the present embodiment, since the traceability RFID tag 50 is arranged at a position closer to the tire inner cavity side; therefore, communication is easy in a case of accessing a reader from the tire inner cavity side. In addition, in the case of a configuration in which the chafer 31 does not have a fiber cord, due to being a configuration not directly arranging the traceability RFID tag 50 on the carcass ply 23, problems do not occur such as the antenna of the being caught in the fiber cord, and the antenna being stretched during vulcanization. In addition, as shown in the present embodiment, by arranging the traceability RFID tag 50 between the chafer 31 and inner liner 29, it is possible to reliably arrange at the inner side in the tire-width direction of the bead core 21.

Then, in the present modified example, the traceability RFID tag 50 is arranged so that a least a part is included within a range of the cross-section height L1 of the bead core 21 (tire-radial direction cross-sectional height L1 of the bead core 21, in a cross-sectional view in the tire-width direction shown in FIG. 4) in the tire-radial direction. Even if such a position, due to being a peripheral region adjacent to the bead core 21 made of metal, even in a case of the tread 12 or side wall 13 being greatly broken, the traceability RFID tag 50 will remain together with the bead core 21. Consequently, it becomes possible to carry out traceability up to end of market life.

It should be noted that the traceability RFID tag 50, when establishing the cross-sectional height L1 of the bead core 21 as the reference, is preferably arranged in a region more to the inner side than a position Y1 (Y1 shown in FIGS. 2 and 4) at a tire-radial direction outside end of the range L2 expanding this L2 by 20% to the outer side in the tire-radial direction (L2 shown in FIGS. 2 and 4). For example, the traceability RFID tag 50 may be arranged in a region more to the inner side in the tire-radial direction than the position Y1, which is between the carcass ply 23 and chafer 31 on the inner side in the tire-radial direction of the bead core 21, or between the carcass ply 23 and chafer 31 on the outer side in the tire-width direction of the bead core 21, or between the chafer 31 and rim strip rubber 32. This region is a peripheral region adjacent to the bead core 21 made of metal, and even in a case of the tread 12 or side wall 13 being greatly broken, the possibility is very high of the traceability RFID tag 50 remaining together with the bead core 21. Consequently, it becomes possible to carry out traceability up to end of market life.

According to the tire 1 of the present embodiment, the following effects are exerted.
(1) In the tire 1 according to the present embodiment, the traceability RFID tag 50 which is capable of communication at least from the inner cavity side of the tire 1 is arranged in the peripheral region of the bead core 21. It thereby becomes possible to carry out traceability up to market end of life, also in a case of the tire being damaged.
(2) In the tire 1 according to the present embodiment, the traceability RFID tag 50 is arranged at a position where communication is not possible from outside of the tire 1, when the tire 1 is mounted to the rim 60. As a communication part including the antenna of the traceability RFID tag 50, it is thereby no longer necessary to adopt a communication part of high cost capable of communication of longer distance than necessary. In addition, even if the use frequency band of the traceability RFID tag 50 were the same frequency band of the normal-use RFID tag 40, for example, the signal of the traceability RFID tag 50 will not be mixed into the signal of the normal-use RFID tag 40.
(3) It further includes the normal-use RFID tag capable of communication from outside of the tire 1 when the tire 1 is mounted to the rim. By equipping the traceability RFID tag 50 separately from the normal-use RFID tag 40, it is possible to arrange the traceability RFID tag 50 in a peripheral region of the bead core 21 at which maintenance of the communication distance is difficult.
(4) Provided are the carcass ply 23 which extends from one bead core 21 to another bead core 21 and folds back around the bead core 21; and the chafer 31 arranged so as to cover the carcass ply 23 around the bead core 21, and the traceability RFID tag 50 is arranged between the carcass ply 23 and chafer 31. Since the traceability RFID tag 50 is thereby arranged in a peripheral region of the bead core 21 made of metal, and arranged between the carcass ply 23 and chafer 31 which are members of high strength, the traceability RFID tag 50 is reliably protected up to the end of market life of the tire 1.
(5) Provided are the carcass ply 23 which extends from one bead core 21 to another bead core 21 and folds back around the bead core 21; the chafer 31 arranged so as to cover the carcass ply 23 around the bead core 21; and inner liner 29 arranged at the tire inner cavity side of the carcass ply 23, and the chafer 31 and inner liner 29 are laminated in a region of part of the carcass ply 23, and the traceability RFID tag 50 is arranged between the chafer 31 and inner liner 29. Since the traceability RFID tag 50 is thereby arranged at the inner side in the tire-width direction of the bead core 21 at a position close the tire inner cavity side, communication from the tire inner cavity side becomes easy.
(6) The traceability RFID tag 50 is arranged at the inner side in the tire-width direction of the bead core 21. Communication from the tire inner cavity side thereby becomes easy. In addition, the traceability RFID tag 50 is not strongly pressed by the rim 60.

### <Second Embodiment>

Next, a tire 1 according to a second embodiment will be explained while referencing FIGS. 5A to 5C. It should be noted that, in the following explanation, the same reference symbols will be attached for configurations which are the same as the first embodiment, and detailed explanations thereof will be omitted. In the present embodiment, the RFID tags 40 and 50 are covered by the protective member 43 configured from rubber sheets. Since the form covered by the rubber sheets, and direction embedded within the tire 1 are the same for both the RFID tags 40 and 50, the following will explain using the normal-use RFID tag 40.

FIG. 5A is a view showing the RFID tag 40 covered by a protective member 43 configured from a rubber sheet. In FIG. 5A, the RFID tag 40 is covered and hidden by the rubber sheet 431 described later. FIG. 5B is a cross-sectional view along the line b-b in FIG. 5A, and FIG. 5C is a cross-sectional view along the line c-c in FIG. 5A. In the present embodiment, as shown in FIGS. 5A to 5C, the RFID tag 40 is covered by the protective member 43.

The RFID tag 40 includes an RFID chip 41 and antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable. However, as in the traceability RFID tag 50, in a case where the communication distance may be short, or a case of being arranged in the peripheral region of the bead core made of metal which has high rigidity, it is possible to use an antenna, etc. formed by printing a pattern on a substrate. The antenna is established at an antenna length optimized according to the frequency band, etc. to be used.

The protective member 43 is configured from two rubber **sheets 431,** 432 which protect by sandwiching the RFID tag 40.

The protective member 43 is configured by rubber of a predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used.

For example, with the modulus of the side wall rubber 30 as a reference, as the rubber used in the protective member 43, it is preferable to use rubber of a modulus 1.1 to 2 times. In addition, by using rubber having a higher modulus than the side-wall rubber 30 as the rubber adopted in the protective member 43, since the rigidity changes step-wise in the order of RFID tag 40, protective member 43 and side-wall rubber 30, it is possible to prevent excessive stress from generating within the rubber structure at the embedding part of the RFID tag 40, in the case of the tire 1 deforming.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40.

In addition, as the protective member 43, an organic fiber layer from polyester fibers or polyamide fibers may be provided. It is also possible to embed an organic fiber layer in the two rubber sheets 431, 432.

In this way, if configuring the protective member 43 by two rubber sheets 431, 432, since it is possible to thinly form the RFID tag 40 including the protective member 43, it is favorable upon embedding in the tire 1. In addition, when assembling the RFID tag 40 in the constitutional members of the tire 1 prior to vulcanization, the RFID tag 40 covered by the rubber sheets 431, 432 can be installed very easily. For example, at a desired position of each rubber member prior to vulcanization, it is possible to appropriately paste the RFID tag 40 covered by the rubber sheets 431, 432 using the adhesiveness of the raw rubber. In addition, by also establishing the rubber sheets 431, 432 as raw rubber prior to vulcanization, it is possible to more easily paste by employing the adhesiveness of the rubber sheets 431, 432 themselves as well.

However, the protective member 43 is not limited to the form configured by two rubber sheets 431, 432, and can adopt various forms. For example, so long as the rubber sheet constituting the protective member covers at least part of the RFID tag 40, effects such as an improvement in workability in the manufacturing process and stress mitigation can be obtained. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

It should be noted that the RFID tag 40 covered by the protective member 43 is embedded in the tire 1 so that the longitudinal direction thereof becomes the direction of the tangential line relative to the circumferential direction of the tire 1, i.e. direction orthogonal to the paper plane in the cross-sectional view of FIGS. 1 to 4. In the manufacturing process, a surface of either one of the rubber sheets 431, 432 is pasted to a constituent member of the tire 1 prior to vulcanization.

By establishing such a form, stress will hardly act on the RFID tag 40, even when the tire 1 deforms. In addition, in the manufacturing process, the work of attaching the RFID tag 40, 50 covered by the protective member 43 becomes easy.

According to the tire 1 of the present embodiment, the following effects are exerted in addition to the above (1) to (6) .

(7) In the present embodiment, the RFID tag 40, 50 is covered by the rubber sheets 431, 432. The workability in the manufacturing processing thereby improves. In addition, the effect of mitigating the stress acting on the RFID tag 40, 50 are obtained.

### <Third Embodiment>

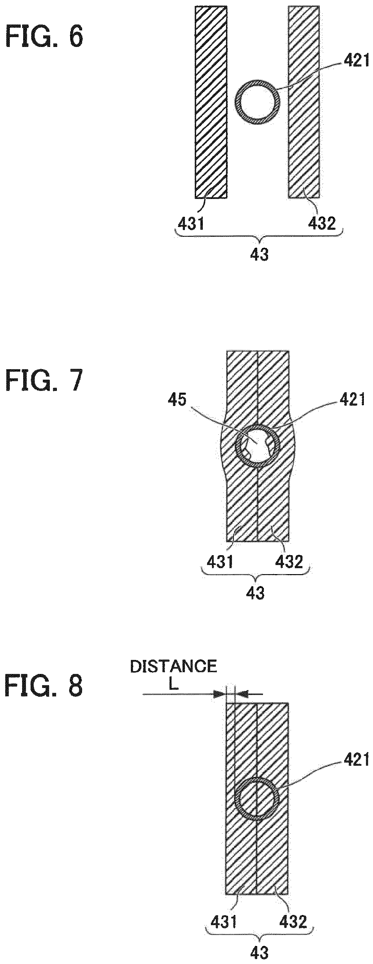

Next, a tire 1 according to a third embodiment will be explained while referencing FIGS. 6 to 12. It should be noted that, in the following explanation, the same reference symbol will be attached for configurations which are the same as the second embodiment, and detailed explanations thereof will be omitted. The present embodiment is a particularly preferable embodiment in the case of the antenna of the RFID tag 40, 50 being a coil-shaped spring antenna. It should be noted that, in the case of adopting a coil-shaped spring antenna, the following steps will not change for either of the RFID tags 40 and 50. Consequently, the following will explain using the normal-use RFID tag 40.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

In the present embodiment, prior to interposing the RFID tag 40 by the two rubber sheets 431, 432 constituting the protective member 43, the rubber is arranged within the spring antenna 421. More preferably, rubber is filled into the spring antenna, so that air will not remain as much as possible. This process and the reason for adopting this process will be explained using FIGS. 6 to 12.

First, a state of the surroundings of the RFID tag 40 in a case of not filling rubber into the spring antenna 421 will be explained as a reference example using FIGS. 6 to 8. FIG. 6 is a view showing a cross section of the spring antenna 421, and rubber sheets 431, 432, prior to interposing the RFID tag 40 by the rubber sheets 431, 432. FIG. 7 is a view showing a cross section of the spring antenna 421, and rubber sheets 431, 432, after interposing the RFID tag 40 by the rubber sheets 431, 432.

As shown in FIG. 7, in this reference example, since rubber is not filled into the spring antenna 421 in advance, a certain amount of air 45 may remain within the spring antenna 421 after interposing by the rubber sheets 431, 432. If air remains in this way, the integrity of the rubber sheets 431, 432 and the spring antenna 421 becomes insufficient, and when the tire 1 deforms, there is concern over the spring antenna 421 not following the motion of the rubber, and the RFID tag 40 having the spring antenna 421 being damaged.

It should be noted that raw rubber before vulcanization is used as the rubber sheets 431, 432 herein. Consequently, by pushing the rubber sheets 431, 432 from both sides, the rubber sheets 431, 432 sticks to some extent inside the spring antenna as shown in FIG. 7. However, very large amounts of time and labor are required in order to stick the rubber sheets 431, 432 until the inside of the spring antenna is completely embedded.

Then, even if assuming a case of taking time and sticking the rubber sheets 431, 432 until the inside of the spring antenna is embedded, the distance L between the outer circumferential part of the spring antenna 421 and the outer surface of the rubber sheets 431, 432 becomes very short, as shown in FIG. 8. In addition, it is difficult to stabilize this distance L, and locally thin portions can occur. Consequently, the protection of the RFID tag 40 by the rubber sheets 431, 42 becomes insufficient, and during vulcanization, there is a possibility of the rubber sheets 431, 432 being damaged.

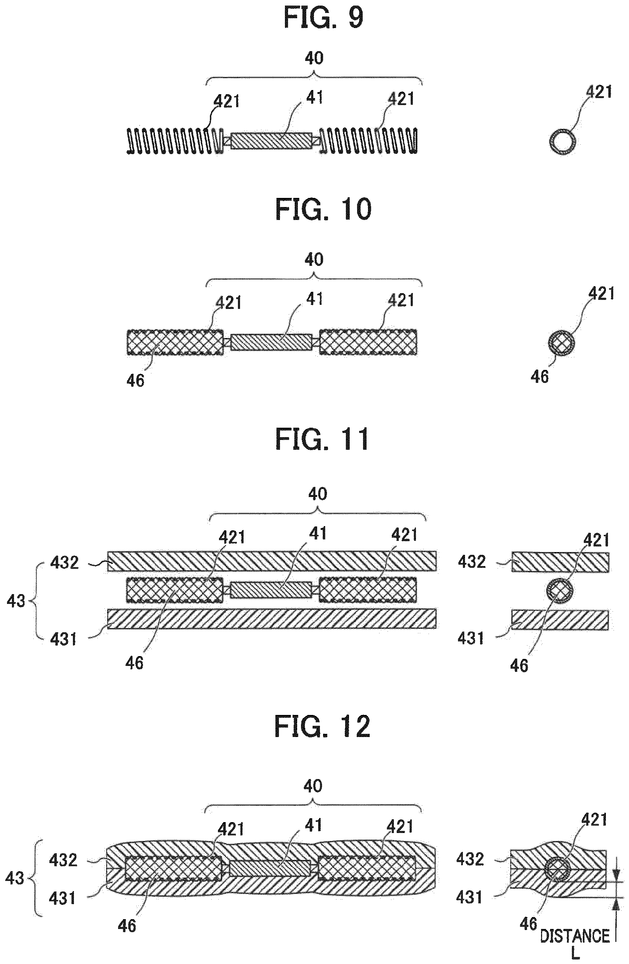

Therefore, in the present embodiment, prior to interposing the RFID tag 40 by the rubber sheets 431, 432, the rubber is arranged within the spring antenna 421, as shown in FIGS. 9 to 12. More preferably, rubber is filled within the spring antenna so that air does not remain as much as possible. It should be noted that the views shown on the right sides of FIGS. 9 to 12 are views showing a transverse section of the spring antenna 421 and the surrounding thereof.

FIG. 9 is a view showing a state prior to filling the rubber 46 into the spring antenna 421, and FIG. 10 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421.

Herein, rubber having flexibility is used as the rubber 46 in order to ensure the flexibility of the spring antenna 421. However, it is preferable to use rubber of a modulus higher than the rubber sheets 431, 432 as the rubber 46, in consideration of the workability, etc. It should be noted that preferably unvulcanized rubber is used as the rubber 46 arranged within the spring antenna 421. By establishing the rubber 46 and rubber sheets 431, 432 as unvulcanized rubber and vulcanizing simultaneously, the integrity of the rubber 46, rubber sheets 431, 432 and spring antenna 421 rises. In addition, the rubber 46, and rubber sheets 431, 432 are more preferably established as the same type of rubber. It should be noted that, by emphasizing the flexibility of the spring antenna 421, rubber of lower modulus than the rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 11 is a view showing a state prior to interposing the RFID tag 40 into which the rubber 46 is filled in the spring antenna 421, by the rubber sheets 431, 432, and FIG. 12 is a view showing a state after interposing by the rubber sheets 431, 432.

As shown in FIG. 12, according to the present embodiment, since the rubber 46 is filled in advance into the spring antenna 421, no air pockets exist between the rubber sheets 431, 432. Consequently, since it is unnecessary to be concerned over air pockets, the process of interposing the RFID tag 40 by the rubber sheets 431, 432 also becomes easy. In addition, by the rubber 46 being arranged within the spring antenna 421, the integrity of the spring antenna 421, rubber 46, and rubber sheets 431, 432 rises, and when the tire 1 deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the rubber sheets 431, 432 stabilizes. In other words, a distance close to the thickness of the rubber sheets 431, 432 is generally secured as this distance L. Consequently, the RFID tag 40 is sufficiently protected by the rubber sheets 431, 432.

The RFID tags 40, 50 interposed by the rubber sheets 431, 432 in the present embodiment are fixedly set to a rubber member of the tire 1, and subsequently, the green tire is vulcanized.

According to the tire 1 of the present embodiment, the following effects are exerted in addition to the above (1) to (7) .

(8) The present embodiment provides a step of arranging the rubber 46 within the spring antenna 421 of the RFID tag 40, 50 serving as an electronic component having a communication function; a step of interposing the RFID tag 40, 50 having the spring antenna 421 into which the rubber 46 was arranged, by the rubber sheets 431, 432, and an arrangement step of arranging the RFID tag 40, 50 interposed by the rubber sheets 431, 432 in the tire 1. The air 45 will thereby not remain inside the spring antenna 421. In addition, since it is unnecessary to be concerned about air pockets, the work of interposing the RFID tag 40, 50 by the rubber sheets 431, 432 also becomes easy. In addition, since the distance L between the outer circumferential part of the spring antenna 421 and the outer surface of the rubber sheets 431, 432 is stabilized, the RFID tag 40, 50 is sufficiently protected by the rubber sheets 431, 432. In the case of an embodiment in which the RFID tag 40, 50 is embedded between the tread rubber 28 and side-wall rubber 30 as in the tire of the present embodiment, between the inner liner 29 and chafer 31, between the chafer 31 and carcass ply 23, or the like, i.e. case of being embedded in a portion of the tire 1 near the outer surface, such air pocket countermeasures and enhanced protection measures are particularly effective.

It should be noted that, although the tire of the present invention can be adopted as various types of tires such as for cars, light trucks, trucks and buses, it is particularly suitable as a tire for automobiles. It should be noted that the present invention is not to be limited to the above-mentioned embodiments, and that even when carrying out modifications, improvements, etc. within a scope of the claims, it is encompassed by the scope of the present invention.

### EXPLANATION OF REFERENCE NUMERALS

- 1: tire
- 11: bead
- 12: tread
- 13: side wall
- 21: bead core
- 22: bead filler
- 23: carcass ply
- 24: ply body
- 25: ply folding part
- 26: steel belt
- 27: cap ply
- 28: tread rubber
- 29: inner liner
- 30: side-wall rubber
- 31: chafer
- 32: rim strip rubber
- 40: RFID tag
- 41: RFID chip
- 42: antenna
- 43: protective member
- 431, 432: rubber sheet
- 46: rubber
- 50: RFID tag for traceability
- 60: rim

## Claims

1. A tire (1) comprising an RFID tag (50) for traceability capable of communicating from at least an inner cavity side of the tire (1) which is disposed in a peripheral region of a bead core (21); and
a carcass ply (23) which extends from one bead core (21) to another bead core (21) and is folded back around the bead core (21) ;
**characterized in that** the tire (1) further comprises a chafer (31) which is arranged so as to cover the carcass ply (23) around the bead core (21), wherein the RFID tag (50) for traceability is disposed between the carcass ply (23) and the chafer (31).

2. The tire (1) according to claim 1, wherein the RFID tag (50) for traceability is disposed at a position from which communication is not possible from outside of the tire (1) when the tire (1) has been mounted to a rim (60).

3. The tire (1) according to claim 1 or 2, further comprising an RFID tag (40) for normal-use which is communicable from outside of the tire (1) when the tire (1) has been mounted to a rim (60).

4. The tire (1) according to any one of claims 1 to 3, wherein the RFID tag (50) for traceability is disposed at an inner side in a tire-width direction of the bead core (21).

## Patentansprüche

1. Reifen (1), aufweisend ein RFID-Tag (50) zur Rückverfolgbarkeit, das dazu in der Lage ist, von mindestens einer Innenhohlraumseite des Reifens (1) zu kommunizieren, das in einem Umfangsbereich eines Wulstkerns (21) angeordnet ist; und
eine Karkassenlage (23), die sich von einem Wulstkern (21) zu einem anderen Wulstkern (21) erstreckt und um den Wulstkern (21) zurückgefaltet ist;
**dadurch gekennzeichnet, dass** der Reifen (1) ferner einen Scheuerschutz (31) aufweist, der derart angeordnet ist, dass er die Karkassenlage (23) um den Wulstkern (21) bedeckt, wobei das RFID-Tag (50) zur Rückverfolgbarkeit zwischen der Karkassenlage (23) und dem Scheuerschutz (31) angeordnet ist.

2. Reifen (1) nach Anspruch 1, wobei das RFID-Tag (50) zur Rückverfolgbarkeit an einer Position angeordnet ist, von der eine Kommunikation von außerhalb des Reifens (1) nicht möglich ist, wenn der Reifen (1) an einer Felge (60) montiert wurde.

3. Reifen (1) nach Anspruch 1 oder 2, ferner umfassend ein RFID-Tag (40) für den Normalbetrieb, mit dem von außerhalb des Reifens (1) kommuniziert werden kann, wenn der Reifen (1) an einer Felge (60) montiert wurde.

4. Reifen (1) nach einem der Ansprüche 1 bis 3, wobei das RFID-Tag (50) zur Rückverfolgbarkeit in einer Reifenbreitenrichtung des Wulstkerns (21) an einer Innenseite angeordnet ist.

## Revendications

1. Pneu (1) comprenant une étiquette RFID (50) pour la traçabilité capable de communiquer à partir d'au moins un côté de cavité interne du pneu (1) qui est disposée dans une région périphérique d'une tringle de talon (21) ; et
un pli de carcasse (23) qui s'étend d'une tringle de talon (21) à une autre tringle de talon (21) et qui est replié autour de la tringle de talon (21) ;
**caractérisé en ce que** le pneu (1) comprend en outre une bandelette talon (31) qui est agencée de manière à couvrir le pli de carcasse (23) autour de la tringle de talon (21), dans lequel l'étiquette RFID (50) pour la traçabilité est disposée entre le pli de carcasse (23) et la bandelette talon (31).

2. Pneu (1) selon la revendication 1, dans lequel l'étiquette RFID (50) pour la traçabilité est disposée à une position à partir de laquelle la communication n'est pas possible depuis l'extérieur du pneu (1) lorsque le pneu (1) a été monté sur une jante (60).

3. Pneu (1) selon la revendication 1 ou 2, comprenant en outre une étiquette RFID (40) pour une utilisation normale avec laquelle il est possible de communiquer depuis l'extérieur du pneu (1) lorsque le pneu (1) a été monté sur une jante (60).

4. Pneu (1) selon l'une quelconque des revendications 1 à 3, dans lequel l'étiquette RFID (50) pour la traçabilité est disposée au niveau d'un côté interne dans le sens de la largeur du pneu de la tringle de talon (21).
